# EUROPEAN PATENT APPLICATION

(11) **EP 1 385 239 A1**
(43) Date of publication of application: **28.01.2004**
(21) Application number: 02255183.2
(22) Date of filing: 24.07.2002
(51) Int. Cl.: H01S 3/093

(54) **Laser pumping chambers**

(71) Applicant: GSI Lumonics Ltd., Rugby, Warwickshire CV21 1QN (GB)
(72) Inventor: Hewitt, Alan, Rugby, Warwickshire CV21 1QN (GB); Ure, Ken, Rugby, Warwickshire CV21 1QN (GB)
(74) Representative: Kensett, John Hinton

(57) **Abstract**

A laser pumping chamber comprises an even number of laser rods (51, 52) arranged in one or more pairs, a plurality of pumping lamps (53, 54) and a specular reflector (55) surrounding the rods and lamps, wherein the reflector is shaped to form a pattern of arcs of overlapping ellipses (56, 57, 58, 59), each ellipse having a first focus centred on a lamp and having its major axis at an angle to the transverse axis of the chamber, and its second focus corresponding with the position of a rod, wherein the or each pair of rods are arranged in a plane perpendicular to the transverse axis of the chamber and the lamps are arranged in a single horizontal plane bisecting the line between the rod centres.

## Description

### Background of the Invention

This invention relates to laser pumping chambers.

A solid state laser, as is well known, generally comprises one or more laser media, hereinafter termed laser rods, which are mounted in a resonator, or oscillator and are optically pumped by one or more optical pumping devices which are usually high power gas discharge lamps that emit in a wavelength range suitable for pumping the laser rods. The rod and lamp are mounted in a pumping chamber which forms the laser resonator in conjunction with one or more fully reflective mirrors and an output coupler, which may comprise a partially reflective mirror such that a portion of the generated laser power in the resonator is emitted from the output coupler as a laser beam.

In order to optimise the performance of such laser, it is necessary to maximise the efficiency of transfer of pumping radiation emitted from the pumping source (lamps) to the laser rods whilst at the same time reducing the effect of thermal lensing in the laser rod. Thermal lensing occurs in a cylindrical laser rod when the temperature of the rod is higher along its longitudinal axis than the temperature of the rod at its radial edge. This is a natural result of the rod absorbing pump radiation uniformly through its bulk but being cooled only around its circumference. Diffuse reflectors such as ceramics scatter light over a broad wavelength range but preferentially scatter shorter wavelengths. The major drawback of thermal lensing is that the rod becomes a positive lens element. The focal power of this lens increases with pump power and the divergence of the output beam increases to a maximum when the focal length of the rod is equal to half of the length of the resonator. The divergence at this the confocal point is inversely proportional to the length of the resonator and proportional to the area of the limiting aperture (usually the rod). Beyond the confocal point the resonator is less stable and becomes unstable when the focal length of the rod equals one quarter of the resonator length. Accordingly, there is a need in the art to provide an efficient pump chamber that utilizes laser rods with small radii to reduce the beam divergence whilst limiting the focal power of each laser rod, allowing higher laser power to be achieved before the confocal point is reached.

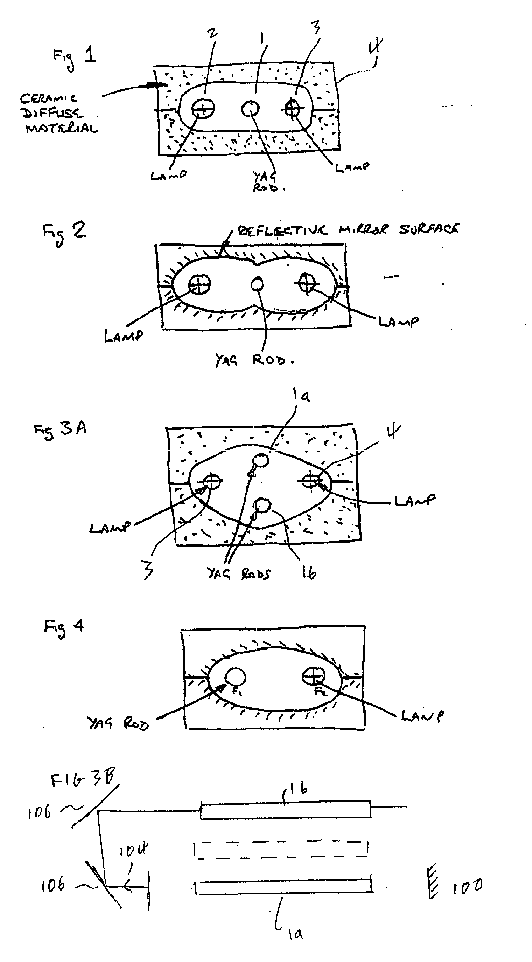

Efficiency of transfer of light from lamps to a laser rod is determined to a large extent by the nature of the pumping chamber reflector. Both the material and the shape of the reflector influence efficiency. Generally, two types of reflector are used in industrial pumping chambers. The first of these, shown in Figure 1, is a diffuse reflector which receives lamp radiation and scatters the lamp radiation substantially uniformly in all directions. A diffuse reflector may be readily made of a ceramic material which has the advantage of being very hard wearing and relatively insensitive to deterioration due to contamination . In this example, a single Nd:YAG rod 1 is mounted between two lamps 2 and 3 in pumping chamber 4.

The second common type of reflector is a specular reflector which reflect substantially all of the incident lamp radiation in a predictable pattern that is dependent upon the angle of incidence with respect to the reflector and the shape of the reflective surface. This comprises a reflective mirror surface in cross section and an example is shown in Figure 2. In this case the chamber may be formed from any number of material that can be readily formed with a shaped reflective surface and the reflective surface may be coated with a highly reflective coating, e.g. gold, that is suitably reflective at the wavelength range of the pump lamp radiation.

Broadly, diffuse reflectors tend to have a lower coupling efficiency than specular reflectors. To obtain the maximum efficiency from diffuse reflectors it is important to minimise the cross sectional area enclosing the lamps and rod. Another important factor has been found to be to maximise the cross sectional area of the rod compared to the cross sectional area enclosed by the reflector. That is, the diameter of the rod should be as large as possible and the cross sectional area of the reflector as small as possible. This is of course contrary to achieving good beam quality. Accordingly, a diffuse reflector is unsuitable for laser applications which require high efficiency and low divergence of the output laser beam.

Figure 3A shows a previously known diffuse cavity configuration in which two rods 1a and 1b are pumped by two lamps 3 and 4. It is well known that this configuration is more efficient than one in which only one rod is pumped by two lamps. The rods in this example lie in a plane perpendicular to the plane of the lamps; one above the plane of the lamps and the other below. Usually, an oscillator is formed around one rod and the second rod is used as an amplifier as is shown in Figure 3B, in which rod 1b forms part of a laser oscillator and rod 1a is used as an amplifier. In this configuration a fully reflective oscillator mirror 100 forms a first end of the laser oscillator and a partially reflective mirror 102 forms the oscillator output coupler through which a laser beam 104 is emitted. A pair of retro-reflecting mirrors 106 directs the oscillating laser energy from rod 1a to the other rod 1b Alternately, the retro-reflecting mirrors 106 may comprise a retro-reflecting prism.

Figure 4 shows a previously proposed specular reflector design in which the reflector is formed into an ellipse in cross section. The rod 1 is placed at one focus of the ellipse and the lamp 2 is placed at the other focus of the ellipse such that substantially all of the energy emitted by the lamp will be focused onto the laser rod. In this way, the light emitted from the lamp is concentrated in the rod.

JP 2,657,407 discloses a system with three or more laser rods of an odd number positioned alternately and in parallel with an even number of excitation lamps.

The present invention arose in an attempt to provide an improved pumping chamber using at least two rods and with maximum efficiency. In addition it was desired to provide a low divergence laser output beam that can be focused to a higher power density.

### Brief Summary of the Invention

According to the present invention there is provided a laser pumping chamber comprising an even number of laser rods arranged in one or more pairs, a plurality of pumping lamps and a specular reflector surrounding the rods and lamps, wherein the reflector is shaped to form a pattern of arcs of overlapping ellipses, each ellipse having a first focus centred on a lamp and having its major axis at an angle to the transverse axis of the chamber, and its second focus corresponding with the position of a rod, wherein the or each pair of rods are arranged in a plane perpendicular to the transverse axis of the chamber and the lamps are arranged in a single horizontal plane bisecting the line between the rod centres.

The pumping chamber may comprise two rods and two lamps.

Preferably, each lamp, other than the lamps at the very ends, powers two pairs of rods.

The pumping chamber may comprise 2n rods and n+1 lamps, where n ≥2.

In a further aspect, the invention provides apparatus for forming a laser pumping chamber, comprising a chamber having an internal specular reflector configuration shaped to form a plurality of arcs of overlapping ellipses, each ellipse sharing a first focus point with a second ellipse and a second focus point with a third ellipse, and having its major axis at an angle to the transverse axis of the chamber.

The invention further provides laser apparatus comprising a laser pumping chamber, comprising a chamber having an internal specular reflector configuration shaped to form a plurality of arcs of overlapping ellipses, each ellipse sharing a first focus point with a second ellipse and a second focus point with a third ellipse, and having its major axis at an angle to the transverse axis of the chamber, at least two laser rods and at least two pumping lamps, each rod and lamp being positioned at a respective shared focus.

The invention can remove the requirement for multiple chamber resonators. In the past, when it has been required to use a plurality of laser rods, the system has often comprised a number of laser pumping chambers, each having one rod, and which are arranged in series.

The invention further provides a laser pumping chamber comprising an even number of laser rods arranged in one or more pairs, a plurality of pumping lamps, and; a specular reflector surrounding the rods and lamps, wherein the reflector is shaped to form a plurality of arcuate sections, each arcuate section forming a portion of an ellipse, with each ellipse having a first focal axis centred on one of the plurality of pumping lamps and having its major axis at an angle to the transverse axis of the chamber, and its second focal axis corresponding with the position of one of the plurality of laser rods, wherein each pair of laser rods are arranged in a plane perpendicular or parallel to the transverse axis of the chamber and the lamps are arranged in a single horizontal plane bisecting the line between the rod centres.

In a further aspect, there is a laser system comprising a laser pumping chamber comprising an even number of laser rods arranged in one or more pairs, a plurality of pumping lamps, and; a specular reflector surrounding the rods and lamps, wherein the reflector is shaped to form a plurality of arcuate sections, each arcuate section forming a portion of an ellipse, with each ellipse having a first focal axis centred on one of the plurality of pumping lamps and having its major axis at an angle to the transverse axis of the chamber, and its second focal axis corresponding with the position of one of the plurality of laser rods, wherein each pair of laser rods are arranged in a plane perpendicular or parallel to the transverse axis of the chamber and the lamps are arranged in a single horizontal plane bisecting the line between the rod centres; the laser system further comprising a beam turning system for optically linking the rods, a mirror and an output coupler for outputting a laser beam.

In a yet further aspect, there is provided a method for forming a laser pumping chamber comprising: forming a specularly reflecting element comprising at least four arcuate sections, each arcuate section having a first focal axis and a second focal axis connected by a major elliptical axis, each arcuate section further having a first adjacent arcuate section and a second adjacent arcuate section; forming each arcuate section with said first focal axis coincident with the first focal axis of one of said first and second adjacent arcuate sections; further forming each arcuate section with said second focal axis coincident with one of said first and second focal axes of said second adjacent arcuate section; positioning a laser pump lamp at each of said coincident first focal axes of said first adjacent arcuate sections; and, positioning a laser rod at each of said second focal axes.

### Description of the Drawings

Embodiments of invention will now be described, by way of example only, with reference to the accompanying schematic drawings, in which:
Figures 1 to 4 show previously proposed pumping chamber configurations;
Figure 5 shows a chamber according to the present invention;
Figure 6 shows a twin rod resonator in side view.
Figure 7 shows a pumping chamber having a different number of laser rods and pumping lamps; and
Figure 8 shows a pumping chamber having a yet further different number of laser rods and pumping lamps.

### Description of Preferred Embodiments of the Invention

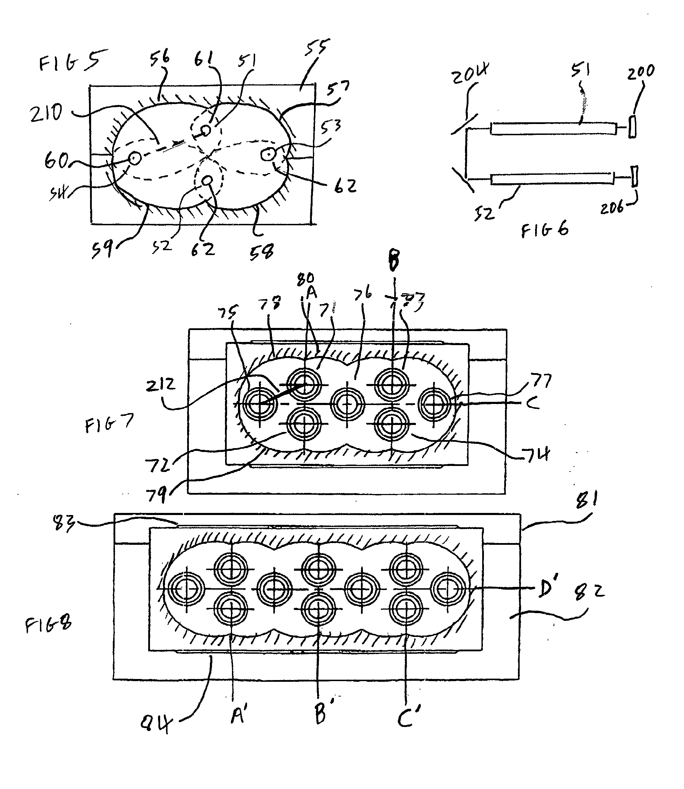

Figure 5 shows a specular reflector pumping chamber in cross section. The chamber shown enables efficient pumping of two laser rods 51, 52 by two lamps 53, 54. In addition the rods may be formed with a small radius to improve the laser beam quality without decreasing the pumping efficiency.The laser rods may for example be Nd:YAG rods although the invention is applicable to any solid state laser rods and may also be applied to any laser chamber utilising a pumping lamp to pump a laser media. The lamps may be any sort of lamps suitable for pumping laser rods, as are known to those in the art.

In the embodiment shown in Figure 5, the laser rods are ND:YAG rods with a radius of 6.25 and a length of 210mm The lamps maybe Xenon arc lamps driven continuously or Xenon flashlamps run in pulsed mode. The invention can be used with both CW and Pulsed lasers. The laser output power is 750W at wavelength of 1064nm The beam quality (beam divergence times beam diameter) is 60mm.mrad

Note that this is just an example.

The two rods 51 and 52 sit one above each other in a "vertical" plane Y, that is, they sit in a plane which is perpendicular to the transverse axis (the plane of the paper in the figure) of the pumping chamber and also to the longitudinal axis (into the paper) of the pumping chamber. As shown in Figure 6, the resonator includes a substantially fully reflecting mirror 200 at one end of the laser resonator and a partially reflective mirror 202 or output coupler at the other end, to produce a resonant laser pumping chamber as is known. Beam-folding means (eg one or more mirrors/prisms) 204 will also be provided to direct the laser power from the rod 51 to the rod 52 and back again. A laser beam 206 exits from the output coupler 202.

The two lamps 53 and 54 are placed either side of the laser rods 51, 52 in a "horizontal" plane X (a plane parallel to the transverse axis of the pumping chamber) which bisects the line between the centres of the two rods 51, 52. The rod and lamps are surrounded by a specular reflector element 55. The reflector element takes the form of a plurality of arcuate sections of overlapping ellipses. In Figure 5, four arcuate sections are shown by 56, 57, 58 and 59 and the dashed lines represent the imaginary ellipses that each of these respectively form a part of. The imaginary ellipses of arcs 56 and 59 are formed to share one focus 60, which coincides with the position of lamp 54. Ellipse 56 has its second focus 61 coinciding with upper rod 51 and ellipse 59 has its second focus 62 coinciding with the position of lower rod 52.

Similarly, ellipses 57 and 58 are formed to share a focus 62 at the position of lamp 53. Ellipse 57 has its second focus also at position 61 (ie coincident with the second focus of ellipse 56 and therefore at the position of rod 51) and ellipse 58 has its second focus at 62, at the position of rod 52.

Thus, each rod and lamp is placed at a position which is a focal axis of two ellipses and each of the ellipses is formed such that its major axis (the axis upon which its two foci lie) is at an angle to the transverse axis X of the pumping chamber, as is evident from the dashed line 210 between the two focal axes of ellipse 56, shown in Figure 5.

Such a reflector design offers an efficient way of coupling the light from two lamps into two rods. Light from lamp 53, for example, is efficiently reflected to both rods 51 and 52 and also light from the lamp 54 is equally reflected into the two rods.

The invention is equally applicable to systems having other numbers of rods and lamps.

In general, each expansion of the pumping chamber and the number of rods and lamps beyond the one of two rods and two lamps of Figure 5 adds a further two rods and one lamp to the assembly. Thus, if there are 2n rods in a system then they will be n+1 lamps where n is ≥ 2 (for n = 2, there are n rods and n lamps).

Figure 7 shows an example where there are four rods and three lamps. The rods are arranged in two vertical planes, shown by A and B, there being a pair of rods in each plane. Thus, a first pair of rods 71 and 72 lie in a first plane A and a second pair 73 and 74 lie in a second horizontally displaced plane B. Three lamps are provided, each of these lie in a plane C which bisects both planes A and B in which the rods lie and the lamps comprise a first lamp 75 on one side of the first pair of rods, a second lamp 76 lying between the two pairs of rods and a third lamp 77 lying on the other side of the rods 73 and 74. The specular pumping chamber comprises arcuate sections of a number of ellipses. In fact, they represent arcuate sections of eight ellipses. Again, the foci of each ellipse are situated at a respective rod or lamp and the foci of two ellipses are shared at each point, similarly to that of Figure 5. For clarity, the imaginary ellipses are not shown in Figure 7 but the principle shown in Figure 5 may be clearly envisaged in Figure 7. In one example, the major axis 212 of the arcuate section 78 is shown passing between the lamp 75 and the rod 71 such that the lamp 75 is positioned at a first focal axis of the ellipse that arcuate section 78 forms a part of and the rod 71 is positioned at the second focal axis of the ellipse that arcuate section 78 forms a part of.

Moreover, lamp 75 additionally lies at the coincident focal axis of a second ellipse which arcuate section 79 forms a part of. The second ellipse has a second focal axis coincident which is coincident with rod 79.

Figure 8 shows a configuration in which there are six rods, arranged in three planes A', B', C' each comprising two rods, and four lamps arranged in a plane D'. Similar spacing and geometrical considerations apply for this system.

Figures 7 and 8, whilst also being schematic, also show some constructional details of the specularly reflective elements and surrounding pump chamber enclosure. The pump chamber enclosure comprises upper and lower sections 81, 82 (see Figure 8 for example). This enables the upper section 81 to be readily removed during servicing of the laser such that the rods and lamps can be inserted or replaced, for cleaning, repair or maintenance. Figures 7 and 8 also show upper and lower cooling channels 83, 84 (Figure 8). Cooling water or other cooling liquid is applied to these to cool the reflector.

The upper and lower reflectors may be machined to shape from naval brass, copper, aluminium or other suitable material. They may be coated, eg gold coated, particularly on the arcuate surfaces. The coating should of course have specular reflecting properties suitable for the lamp/rod configuration to be used, for example Xenon lamps pumping Nd:YAG laser rods.

The reflectors may be cooled by flowing water on their back surface or through cooling channels bored in their bulk. The active reflector surface is kept dry in operation to minimise the possibility of contamination from cooling water.

The reflectors may alternatively be formed of ceramic of which at least the arcuate portions are gold plated or otherwise treated if necessary.

Extension of the principle of the invention to embodiments of greater number of clamps and rods has many advantages. The efficiency of the pumping chamber may be further enhanced and improved by additional rods and lamps. The present invention enables a single chamber resonator, having a plurality of rods, and suitable beam folding mirrors where necessary. Thus, by using embodiments of the present invention, more compact designs can be obtained with consequent savings in space since the overall laser head need not be changed to add additional rods and lamps.

Furthermore, the present invention allows the use of an additional number of rods per chamber, reducing the thermal lensing effect per rod. This improves the beam quality at a given output power by reducing the thermal lensing per unit of pump power. It also makes the resonator less sensitive to alignment tolerance on the rod since the resonator operates further below the confocal point. This simplifies the manufacturing and assembly processes.

The increased efficiency offered by having multiple rods in one chamber, and the novel reflector shape, leads to a lower capital cost of power supplies and lower utility costs in operation.

It is well known that the worst case beam quality of a laser is inversely proportional to the effective length of the resonator and proportional to the area of the limiting aperture inside the resonator, which is usually the rod. The best beam quality (lowest numerical value thereof) is therefore derived from long resonators with small radius limiting apertures.

However, it is known that small radius rods are inefficiently pumped, particularly in diffuse pumping chambers. Hence, there is generally a conflict between achieving good beam quality and efficient pumping, ie high output power.

It is well known that beam quality can be improved by splitting the total input pump power between two rods. Thermal lensing is reduced since the heat input to each rod is half of that in a single rod design. In many previously available lasers, the rods are arranged in a periodic two rod oscillator. The beam quality characteristics are the same as would be obtained by pumping one rod in a resonator half the length with half the total input power. The output power is broadly twice that which would be obtained by pumping one rod with half the total input power.

In the present invention, both rods (or more rods) have been placed in the same pumping chamber and a periodic resonator is built around them. Thus, the present invention has the advantage of efficiency benefits of a specular pumping chamber and chambers with a plurality of rods with the beam quality benefits of a periodic two or more rod oscillator. This invention can lead to improved efficiency and beam brightness compared to conventional specular reflector designs, and can be combined with folding optics to form a compact folded resonator.

It will be appreciated that in multi-rod pumping chambers additional beam-folding means (usually mirrors or prisms) are required to pass a beam between rods, and increase the effective resonator length.

Of course, in other embodiments the rods may be arranged in pairs parallel to, or along, the transverse axis of the chamber and the lamps in a plane perpendicular to this (ie for a 2 lamp - 2 rod case the disposition of Figure 5 could be rotated through 90°).

## Claims

1. A laser pumping chamber comprising an even number of laser rods arranged in one or more pairs, a plurality of pumping lamps, and; a specular reflector surrounding the rods and lamps, wherein the reflector is shaped to form a plurality of arcuate sections, each arcuate section forming a portion of an ellipse, with each ellipse having a first focal axis centred on one of the plurality of pumping lamps and having its major axis at an angle to the transverse axis of the chamber, and its second focal axis corresponding with the position of one of the plurality of laser rods, wherein each pair of laser rods are arranged in a plane perpendicular or parallel to the transverse axis of the chamber and the lamps are arranged in a single horizontal plane bisecting the line between the rod centres.

2. A pumping chamber as claimed in Claim 1, comprising two rods and two lamps.

3. A pumping chamber as claimed in Claim 1, comprising 2n rods and n+1 lamps, where n ≥ 2.

4. A pumping chamber as claimed in any preceding claim, wherein each lamp pumps two pairs of rods.

5. Apparatus for forming a laser pumping chamber, comprising a chamber having an internal specular reflector configuration shaped to form a plurality of arcuate sections, each arcuate section forming a portion of an ellipse, each ellipse sharing a first focal axis with a second ellipse and a second focus point with a third ellipse, and having its major axis at an angle to the transverse axis of the chamber.

6. Laser apparatus comprising a laser pumping chamber, comprising a chamber having an internal specular reflector configuration shaped to form a plurality of arcuate sections each section forming a portion of an ellipse, each ellipse sharing a first focus point with a second ellipse and a second focus point with a third ellipse, and having its major axis at an angle to the transverse axis of the chamber, at least two laser rods, and at least two pumping lamps, each rod and lamp being positioned at a respective shared focus.

7. Laser apparatus as claimed in Claim 6, including means for establishing a laser resonator around the chamber.

8. Laser apparatus as claimed in any preceding claim, including means for enabling cooling water to cool the reflectors.

9. Laser apparatus as claimed in Claim 9, wherein the means comprises cooling channels bored in the reflectors, or formed on a surface thereof.

10. Laser apparatus as claimed in any preceding claim, comprising a fixed lower portion and a detachable upper portion.

11. A laser resonator, comprising a laser pumping chamber comprising an even number of laser rods arranged in one or more pairs, a plurality of pumping lamps, and; a specular reflector surrounding the rods and lamps, wherein the reflector is shaped to form a plurality of arcuate sections, each arcuate section forming a portion of an ellipse, with each ellipse having a first focal axis centred on one of the plurality of pumping lamps and having its major axis at an angle to the transverse axis of the chamber, and its second focal axis corresponding with the position of one of the plurality of laser rods, wherein each pair of laser rods are arranged in a plane perpendicular or parallel to the transverse axis of the chamber and the lamps are arranged in a single horizontal plane bisecting the line between the rod centres; the laser resonator further comprising a mirror and an output coupler.

12. A laser system comprising a laser pumping chamber comprising an even number of laser rods arranged in one or more pairs, a plurality of pumping lamps, and; a specular reflector surrounding the rods and lamps, wherein the reflector is shaped to form a plurality of arcuate sections, each arcuate section forming a portion of an ellipse, with each ellipse having a first focal axis centred on one of the plurality of pumping lamps and having its major axis at an angle to the transverse axis of the chamber, and its second focal axis corresponding with the position of one of the plurality of laser rods, wherein each pair of laser rods are arranged in a plane perpendicular or parallel to the transverse axis of the chamber and the lamps are arranged in a single horizontal plane bisecting the line between the rod centres; the laser system further comprising a beam turning system for optically linking the rods, a mirror and an output coupler for outputting a laser beam.

13. A method for forming a laser pumping chamber comprising:
forming a specularly reflecting element comprising at least four arcuate sections, each arcuate section having a first focal axis and a second focal axis connected by a major elliptical axis, each arcuate section further having a first adjacent arcuate section and a second adjacent arcuate section;
forming each arcuate section with said first focal axis coincident with the first focal axis of one of said first and second adjacent arcuate sections;
further forming each arcuate section with said second focal axis coincident with one of said first and second focal axes of said second adjacent arcuate section;
positioning a laser pump lamp at each of said coincident first focal axes of said first adjacent arcuate sections; and,
positioning a laser rod at each of said second focal axes.

14. The method of Claim 13, further comprising the step of forming each laser rod with a radius of less than 8 mm.

15. The method of Claim 13 or 14, further comprising providing two laser rods and two laser pump lamps in the pump chamber.

16. The method of any of Claims 13 to 15, further comprising forming the laser pumping chamber with a fixed lower portion and a detachable upper portion, said detachable upper portion providing access for servicing elements of the pumping chamber.

17. The method of any of Claim 13 to 16, wherein the laser pumping chamber is formed from a ceramic material and wherein each arcuate portion is coated with a gold layer with specular reflecting properties suited for a Xenon lamp pumping a YAG laser rod.
